# EUROPEAN PATENT SPECIFICATION

(11) **EP 2 343 348 B1**
(45) Date of publication and mention of the grant of the patent: **12.09.2012**
(21) Application number: 11157365.5
(22) Date of filing: 23.05.2008
(51) Int. Cl.: C09J 109/00, C09D 123/28, C09J 115/02, C09J 123/28, C09J 5/02, C09J 5/06, C09J 121/00

(54) **Powder Adhesives for Bonding Elastomers**
Pulverklebstoff zum Kleben von Kautschuk
Adhésifs en poudre pour unir des élastomères

(30) Priority: 24.05.2007 US 939911 P
(43) Date of publication of application: 13.07.2011
(62) Divisional of application: 08769675.3
(73) Proprietor: LORD CORPORATION, Cary, NC 27511 (US)
(72) Inventor: Wei, Kei-Yi, Erie, PA 16506 (US); Abbey, Kirk J., Garner, NC 27529 (US); Halladay, James, Erie, PA 16505 (US)
(74) Representative: von Kreisler Selting Werner

(56) References cited:
- EP-A- 0 633 301
- EP-A- 0 832 915
- DE-A1- 4 017 499
- US-A- 4 079 168
- US-A1- 2004 168 760

## Description

### FIELD OF THE INVENTION

The present invention relates to adhesive compositions for bonding elastomers to metal substrates. More particularly, the present invention relates to powdered adhesives for bonding vulcanizable elastomers to metallic substrates, methods for bonding vulcanizable elastomers using such adhesives, and the bonded articles produced thereby.

### BACKGROUND OF THE INVENTION

Bonding of rubber vulcanizates to substrates, particularly metal, is conventionally obtained by two-coat primer-overcoat adhesive systems or one-coat primerless systems. In order to provide acceptable bonding, adhesive compositions must exhibit excellent bonding demonstrated by or characterized by retention of rubber on the substrate after bond destruction, adequate sweep resistance i.e., ability of the uncured adhesive coating on the substrate to remain undisturbed against the force of injected green rubber into the mold cavity, good storage stability of the wet adhesive and durable adhesion under extreme environmental conditions, typically measured by the hot tear test (ASTM D-429) or boiling water and salt spray tests (ASTM B-117-97, for example).

While solvent-based adhesives generally provide good adhesion, they also possess many undesirable qualities from the viewpoint of health, safety, and environmental quality. The solvents are usually toxic, requiring special handling by those who come into contact with the solvents, with the adhesives containing the solvents, or with the fumes generated by either. In addition, the volatility of both the solvents and their fumes presents the risk of fire or explosion during manufacture, packaging, shipping, and use of solvent-based adhesives. Additionally, environmental concerns, especially as reflected in and enforced through governmental laws and regulations, further detract from the desirability of using solvent-based adhesives.

These problems can be avoided through the use of water-based adhesives, such as those described in U.S. Patent No. 4,483,962 to Sadowski. Sadowski discloses aqueous adhesive systems which employ a terpolymer latex formed by the emulsion polymerization of 2,3-dichloro-1,3-butadiene and a mixture of at least two different unsaturated monomers copolymerizable therewith. While such water-based adhesives are effective rubber to metal bonding agents for some applications, they can be troublesome to apply to substrates, are less effective bonding agents for certain substrates and generally cost more than their solvent-based counterparts.

It would therefore be desirable to provide an adhesive which will produce rubber tearing bonds under common testing conditions such as boiling water, hot tear, and salt spray, without the environmental concerns raised by the use of solvents and the processing limitations encountered with aqueous systems.

Unfortunately, to formulate a powder adhesive composition an additional set of problems must be overcome that do not arise with solvent or aqueous adhesives. Solvent-based adhesives employ film formers comprising polymeric materials that can be dissolved in a solvent. The adhesive film is formed by applying the solvent dissolved film former, then drying to evaporate and remove the solvent. Likewise, aqueous adhesives often use a latex film former which is dried to produce an adhesive film, however many of the polymers employed in these latexes will not film-form out of solution.

It is to these perceived needs that the present invention is directed.

US-A-2004/0168760 relates to adhesives and bonding methods employing a single coat of a solvent-based adhesive that effectively bonds thermoplastic polymers and especially thermoplastic elastomers. The adhesive components are a organosilane component selected from organosilane-isocyanate addut and isocyanato-organosilane, a post-chlorinated polymer containing propoylene repeating units or derivative thereof, and solvent.

EP-A-0633301 relates to an adhesive composition useful for bonding thermoplastic elastomers to substrates such as metal that contain a halogenated polyolefin that has been chemically modified to contain a sulfur-containing compound . The modified polyolefin prepared by first reacting the polyolefin with an acid anhydride and then reacting the anhydridr-modified polyolefin with the sulfur-containing compound.

### SUMMARY OF THE INVENTION

The present invention relates to a powder adhesive composition for bonding an elastomer to a metal substrate comprising a powdered film forming polymer having a liquefaction temperature above room temperature and is capable of forming rubber tearing bonds between the elastomer and the metal substrate, wherein the film forming polymer comprises halogenated polypropylene characterized in that the composition comprises a crosslinking agent comprising a nitroso compound.

In a first aspect of the present invention, a powder adhesive is provided comprising at least one film forming resin or polymer component that does not sinter nor alter its bonding properties during storage, yet can flow sufficiently when heated and form a cohesive film to allow the coated metal substrate to be handled after cooling without removal or damage of the coating. The powder adhesive must be shelf-stable and free-flowing at room temperature while also melting at elevated temperatures so as to form a continuous film on the surface of a substrate.

For a powdered adhesive, it is necessary to have a film forming polymer that has a liquefaction temperature within a certain temperature range. This liquefaction can arise from exceeding a glass transition temperature (Tg) or a melting point temperature. The liquefaction temperature must be above room temperature so that the powder is stable for storage and shipping and is free flowing. However, the liquefaction temperature must be low enough so that the film can form on the substrate without setting off the chemical reactions that are intended to occur only after the vulcanizing elastomer is in contact with the adhesive, or thermally damaging the polymer or the substrate.

If the powder formulation is being melt-mixed, the reactions should occur well above the temperature used for the melt processing. Furthermore, the film former must be compatible both with the reactive crosslinker and with the elastomer to be bonded.

Furthermore, either the film forming polymer or the crosslinking agents or both must be capable of chemically reacting with the elastomer. Thus, the number of requirements that needed to be met simultaneously in a powder adhesive has increased the complexity of the problem and excludes most of the materials in the form commonly employed in elastomer bonding.

### DETAILED DESCRIPTION OF THE INVENTION

The present invention provides powder adhesives which effectively bond elastomers to metal substrates. The powder adhesives eliminate the environmental concerns caused by spray applying solvent-based adhesives, thereby allowing application of the adhesive without the need to capture and contain solvent vapor emissions. Further, powder adhesives may be electrostatic spray applied and any overspray can be captured, reclaimed, and reused thereby further eliminating waste and increasing transfer efficiency.

In one embodiment of the present invention, the aforementioned issues relating to the need for a film former with a liquefaction temperature within a predetermined range was solved by identifying thermoplastic (high Tg) resins with liquefaction temperatures within certain narrow ranges. Additionally, low Tg polymers, like certain copolymers of dichlorobutadiene were synthesized that are semi-crystalline at room temperature, but which exhibit crystalline melting in the desired temperature range.

Since the adhesive composition must be a powder at normal working temperature the lower limit of the liquefaction temperature should be above a normal operating temperature, commonly referred to as "room temperature". Similarly, the upper limit of the liquefaction temperature will vary depending upon the heat stability of the constituents present in the adhesive composition. In one embodiment of the present invention, the adhesive composition is sintered on a substrate prior to elastomer molding, generally at a temperature of over 300 °C. In this embodiment, the liquefaction temperature need only be less than the sintering temperature.

In the present invention a crosslinker is employed, the liquefaction temperature of the film-former should be below the temperature at which the crosslinker reacts. Exceeding this temperature would cause the crosslinker to react and crosslink the adhesive film before it has contacted the elastomer resulting in weaker bonding.

In a preferred embodiment of the present invention, the film former comprises a liquefaction temperature of at least 50 °C and more preferably at least 80 °C. In another preferred embodiment of the present invention, the film former comprises a liquefaction temperature of no more than 300 °C and if a crosslinker is employed no more than 175 °C.

Additionally, the powder adhesive composition must form elastomer tearing bonds between the elastomer and the substrate. In the art, this is known as a "rubber tearing" bond and is measured by "rubber retention" which is defined as the percentage of the original bond area that is visibly covered by rubber after the rubber and substrate parts are pulled apart. For the purposes of the present invention, a successful powder adhesive will produce rubber tearing bonds with a rubber retention of at least 80% and preferably over 90% when tested to ASTM D 429 Method B.

In a preferred embodiment of the present invention, the film former component comprises halogenated polyolefins. In a most preferred embodiment of the present invention, the film former comprises chlorinated and/or brominated polypropylene, polybutylene, or poly-butadiene type polyolefins such as poly(2,3-dichlorobutadiene), brominated poly(2,3-dichlorobutadiene), and poly(2,3-dichlorobutadiene) copolymers, hexachlorocyclopentadiene adducts of unsaturated polyolefins, chlorosulfonated polyethylene, chlorinated polyethylene, chlorinated polyisoprene, and the like.

The butadiene monomers useful for preparing the butadiene polymer can essentially be any monomer containing conjugated unsaturation. Typical monomers include 2,3-dichloro-1,3-butadiene; 1,3-butadiene; isoprene; 2,3-dimethylbutadiene; chloroprene; bromoprene; 2,3-dibromo-1,3-butadiene; 1,1,2-trichlorobutadiene; cyanoprene; hexachlorobutadiene; and combinations thereof. As described above, an especially preferred embodiment of the present invention is one wherein the butadiene polymer includes at least 60 weight percent, preferably at least 70 weight percent, 2,3-dichloro-1,3-butadiene monomer units.

In a further embodiment of the present invention, the butadiene monomer can be copolymerized with other monomers to enhance bond strength and achieve a Tg or melting point within the necessary range. Such copolymerizable monomers include α-haloacrylonitriles such as α-bromoacrylonitrile and α-chloroacrylonitrile; α,β-unsaturated carboxylic acids such as acrylic, methacrylic, 2-ethylacrylic, 2-propylacrylic, 2-butylacrylic and itaconic acids; alkyl-2-haloacrylates such as ethyl-2-chloroacrylate and ethyl-2-bromoacrylate; α-bromovinylketone; vinylidene chloride; vinyl toluenes; vinylnaphthalenes; vinyl ethers, esters and ketones such as methyl vinyl ether, vinyl acetate and methyl vinyl ketone; esters amides, and nitriles of acrylic and methacrylic acids such as ethyl acrylate, methyl methacrylate, glycidyl acrylate, methacrylamide and acrylonitrile; and combinations of such monomers.

The copolymerizable monomers, if utilized, are preferably those which provide functionality to enhance crosslinking between the film former and the elastomer. In a further preferred embodiment of the present invention, the copolymerizable monomer comprises α-haloacrylonitrile and/or α,β-unsaturated carboxylic acids. In an additional embodiment of the present invention, the copolymerizable monomers are generally employed in an amount of 0.1 to 15 weight percent, based on the weight of the total monomers utilized to form the butadiene polymer.

In an additional embodiment of the present invention, the film former employs a base polymer which is post-chlorinated polypropylene (CPP). The base polymer comprises propylene repeating units. The film former includes derivatives of the post-chlorinated polypropylene. The base polymer weight average molecular weight is from 5,000 to 60,000, and preferably from 15,000 to 45,000. The chlorine content should be in the range of 10 to 60 weight percent, preferably 20-50 weight percent. As the base polymer comprising propylene repeating units, these include crystalline polypropylene, noncrystalline polypropylene, ethylene-propylene copolymer, ethylene-propylene-diene copolymer, and propylene--C₄ -C₁₀ -α--olefin copolymer. The base polymer may actually be a blend of polypropylene homopolymer and a copolymer comprising propylene repeating units may also be used. As an example of a blend, 25 to 95 weight percent of a propylene homopolymer is combined with from 5 to 75 weight percent, preferably 10 to 60 weight percent of a random propylene copolymer containing repeating units based on 1-butene, 1-pentene, 1-hexene, 1-heptene, or 1-octene.

Many suitable derivatives of chlorinated polypropylene useful herein are known. Such a representative derivative is a polymer comprising propylene repeating units which is modified by incorporating one or more ethylenic unsaturated monomers, e.g., acrylate or methacrylate monomers, macromonomers, vinyl-functional organosilanes, liquid terminal ethylenic polydiene polymers and/or other graft-functional materials such as maleic acid anhydride, or maleimides. In one such chlorinated polypropylene derivative, chlorinated polypropylene is derivatized with 0.1 to 10 weight "phr" (parts per hundred CPP) of maleic acid anhydride according to known methods. As a further alternative derivative, maleic acid anhydride and acryl- or methacryl-modified hydrogenated polybutadiene, are incorporated using peroxide under known conditions. In another chlorinated polypropylene derivative, chlorinated polypropylene is derivatized with 0.1 to 10 weight phr of epoxy by reacting the CPP with an epoxy group containing compound such as epichlorohydrin.

In the present invention, the powder adhesive further comprising anitroso compound comprises a crosslinking or crossbridging agent to obtain acceptable bond strength and elastomer retention. The crosslinking agent may be either appended on the film former or added as a separate constituent to the adhesive composition. For example, if chlorinated polypropylene is employed as the film former, it alone may not produce commercially sufficient rubber tearing bonds in some applications, as illustrated in Example 11. However, as illustrated in Example 7, the addition of a crosslinker provides enhanced bonding of the adhesive formulation.

In a further embodiment of the present invention, the crosslinking or crossbridging agents comprise, individually or in combination, di- or polynitrosoaromatics, bis- or polymaleimides, di-or polyisocyanates, epoxies, metal oxides, quinone dioximes and their adducts.

The nitroso compound can be any aromatic hydrocarbon, such as benzenes, naphthalenes, anthracenes, biphenyls, and the like, containing at least two nitroso groups attached directly to non-adjacent ring carbon atoms. More particularly, such nitroso compounds are described as poly-C-nitroso aromatic compounds having from 1 to 3 aromatic nuclei, including fused aromatic nuclei, having from 2 to 6 nitroso groups attached directly to non-adjacent nuclear carbon atoms. The nuclear hydrogen atoms of the aromatic nucleus can be replaced by alkyl, alkoxy, cycloalkyl, aryl, aralkyl, alkaryl, arylamine, arylnitroso, amino, halogen, and like groups. The presence of such substituents on the aromatic nuclei has little effect on the activity of the poly-C-nitroso compounds in the present invention. As far as is presently known, there is no limitation as to the character of the substituent, and such substituents can be organic or inorganic in nature. Thus, where reference is made to "DNB", this collectively refers to poly-C-nitroso or di-C-nitroso aromatic compound, benzenes, or naphthalenes, and is understood to include both substituted and unsubstituted nitroso compounds as well as the monomeric form of the compound, unless otherwise specified.

The metal oxides which are suitable for use in the present invention are zinc oxide and magnesium oxide. The metal oxides are well-known articles of commerce and need not be discussed here in detail. It is noted that other oxides including lead oxide, iron oxide and calcium oxide were tried in one-coat rubber-to-metal adhesives but failed to provide the required environment resistance.

The effectiveness of the herein-described metal oxides, particularly with respect to providing environmental resistance for rubber-to-metal adhesive compositions is not fully understood. It is known that such metal oxides, as an amphoteric material, react with acids to form metal salts, thereby acting as an acid scavenger. Furthermore, such metal oxides are well known curing activators in the vulcanization of rubber.

In one embodiment of the present invention, the powder adhesive is applied directly to a substrate. In an alternate embodiment of the present invention, the powder adhesive is applied to a primer coated substrate or a surface treated substrate such as zinc phosphatized steel. The primer may optionally comprise a conventional water-based or solvent-based primer. Typical conventional water-based primers include phenolic resin-type primers such as CHEMLOK® 802, CHEMLOK 805, CHEMLOK 8006, and CHEMLOK 8401 produced by Lord Corporation. Typical solvent-based primers include phenolic resin-type primers such as CHEMLOK 205 or CHEMLOK 207 produced by Lord Corporation.

The powder adhesive compositions of the present invention have been found to be particularly useful for bonding a wide variety of elastomeric materials, including both vulcanized and vulcanizable elastomeric materials, to metal substrates. Elastomers which can be bonded include without limitation natural rubber, polychloroprene rubber, styrene-butadiene rubber, nitrile rubber, ethylene/propylene copolymer rubber (EPM); ethylene/propylene/diene terpolymer rubber (EPDM); butyl rubber, polyurethane rubber, PAREL type elastomers, and the like. Metals and their alloys to which the elastomers can be bonded include steel, stainless steel, lead, aluminum, copper, brass, bronze, Monel metals, nickel, zinc, and the like, including treated metals such as phosphatized steel, galvanized steel, and the like.

The powder adhesive may be made by various processes including preparation of an aqueous or solvent-based composition, then spray drying, freeze drying, precipitation or otherwise evaporating the solvent or aqueous solution followed by grinding, melt processing and subsequent grinding. The grinding step may be performed at room temperature or at cryogenic temperatures to enhance the processability of the powder.

In one embodiment of the present invention, the powder adhesive is ground to an average particle size of less than about 70 µm. In a more preferred embodiment of the present invention, the powder adhesive is ground to an average particle size of less than about 30 µm. Generally, if the particle size is too large, problems arise with fluidization during the spray application and regulation or control of the ultimate film thickness. However, depending upon the application, it may be possible to employ powder adhesives with particle sizes greater than the preferred ranged specified herein.

Thus, there has been outlined, rather broadly, the more important features of the invention in order that the detailed description that follows may be better understood and in order that the present contribution to the art may be better appreciated. There are, obviously, additional features of the invention that will be described hereinafter and which will form the subject matter of the claims appended hereto.

### EXAMPLES

The powder adhesives of the present invention will bond a variety of rubbers to metal substrates. Unless otherwise noted, bonding studies were conducted using a 55 durometer sulfur-cured, carbon black reinforced natural rubber compound, which is typically used as a compound for engine mounts and similar applications. Unless otherwise noted, the steel substrate employed was zinc phosphatized mild steel coupons. Studies include mainly primary bond strengths, along with comparisons to select commercially available solvent or aqueous adhesives.

In these Examples, the following abbreviations and/or commercially available products were employed:

| | |
|---|---|
| CHEMLOK® 205 primer | solvent based phenolic primer available from Lord Corporation, Cary, NC. |
| CHEMLOK 8007 primer | aqueous phenolic primer available from Lord Corporation, Cary, NC. |
| CHEMLOK 6254 adhesive | adhesive covercoat containing a mixture of chlorinated polymers and dinitrosobenzene in a mixture of organic solvents available from Lord Corporation, Cary, NC. |
| MetalJacket® 1100/2110 metal treatment | an autodepositable metal treatment and primer system based on phenolic resins available from Lord Corporation, Cary, NC. |
| P(DCD/α-BRAN) | dichlorobutadiene / bromoacrylonitrile copolymer |
| CPP | chlorinated polypropylene |
| CPPma | chlorinated polypropylene modified with maleic anhydride |
| CPPepoxy | chlorinated polypropylene containing 5% epoxy |

### Example 1

A 90/10 P(DCD/α-BRAN) adhesive system was spray applied to a film thickness of 25.4 µm over CHEMLOK 205 primer. The rubber was bonded at 171 °C and 13.8 MPa for 14 minutes.

### Example 2 (not according to the invention)

Brominated-P(DCD) at about 7weight percent bromine was applied to a film thickness of 50.8 µm over CHEMLOK 205 primer and bonded as in Ex. 1.

### Comparative Example 3

Natural rubber was bonded with commercially available solvent-based CHEMLOK 205/CHEMLOK 6254 and cured for 15 minutes at 160 °C at 13.8 MPa.

### Example 4 (not according to the invention)

A 90/10 P(DCD/α-BRAN) adhesive system was applied to a film thickness of 25.4 µm over MetalJacket 1100/2110 metal treatment, then natural rubber was bonded at 160 °C and 13.8 MPa for 14 minutes.

### Example 5 (not according to the invention)

Brominated-P(DCD) at about 7 weight percent bromine was applied to a film thickness of 50.8 µm over MetaUacket 1100/2110 metal treatment and bonded as in Example 4.

### Example 6

CPPma formulated with 27.75 weight percent dinitrosobenzene, 8 weight percent phenylene bis-maleimide and 0.4 weight percent chlorinated polyisoprene as a wetting agent was applied over CHEMLOK 205 primer. The rubber was then bonded at 160 °C and 13.8 MPa for 14 minutes.

### Example 7

CPP formulated with 27.75 weight percent dinitrosobenzene, 8 weight percent phenylene bis-maleimide and 0.4 weight percent chlorinated polyisoprene as a wetting agent was:
A) applied over CHEMLOK 205 primer, then natural rubber was bonded at 160 °C and 13.8 MPa for 14 minutes.
B) applied over zinc phosphatized steel, then natural rubber was bonded at 160 °C and 13.8 MPa for 14 minutes.

### Example 8

CPPepoxy formulated with 27.75 weight percent dinitrosobenzene, 8 weight percent phenylene bis-maleimide and 0.4 weight percent chlorinated polyisoprene as a wetting agent was:
A) applied over CHEMLOK 205 primer, then natural rubber was bonded at 160 °C and 13.8 MPa for 14 minutes.
B) applied over zinc phosphatized steel, then natural rubber was bonded at 160 °C and 13.8 MPa for 14 minutes.

| Example # | Peel Value | Rubber Retention |
|---|---|---|
| 1 (not according to the invention) | 126 N/cm | 90% rubber |
| 2 (not accord. to the invention) | 109 N/cm | 95% rubber |
| Comparative 3 | 107 N/cm | 100% rubber |
| 4 (not according to the invention) | 114 N/cm | 98% rubber |
| 5 (not according to the invention) | 131 N/cm | 98% rubber |
| 6 | 100 N/cm | 100% rubber |
| 7a | 103 N/cm | 100% rubber |
| 7b | 70 N/cm | 34% rubber |
| 8a | 212 N/cm | 100% rubber |
| 8b | 145 N/cm | 100% rubber |

### Comparative Examples 9 to 11

Individually, CPPma, CPPepoxy, and CPP were cryogenically ground, electrostatically sprayed over both zinc phosphatized steel and over MetalJacket 1100/2110 primed steel, and baked for five minutes at 121 °C. After cooling, these were compression molded with natural rubber at 160 °C and 13.8 MPa for 14 minutes. The bonded samples were tested after completely cooling to room temperature. The average results for three samples each are given in the following table:

| Coating | EX # | Over Zinc phosphate (N/cm) | Zinc phos % rubber retention | Over MetalJacket (N/cm) | MetalJacket % rubber retention |
|---|---|---|---|---|---|
| CPPma | 9 | 21 | 0 | 37 | 0 |
| CPPepoxy | 10 | 0 | 0 | 16 | 0 |
| CPP | 11 | 0 | 0 | — | — |

### Example 12

CPPma formulated with 32 weight percent brominated poly(2,3-dichlorobutadiene) at 20 weight percent bromine, 27.75 weight percent dinitrosobenzene, 8 weight percent phenylene bis-maleimide and 0.4 weight percent chlorinated polyisoprene as a wetting agent, applied over CHEMLOK 205 primer, then natural rubber was bonded at 160 °C and 13.8 MPa for 14 minutes.

| Example # | Peel Value | Rubber Retention |
|---|---|---|
| 12 | 107 N/cm | 100% rubber |

### Comparative Example 13

CPPepoxy formulated with 37.5 weight percent dinitrosobenzene. Formulation was deposited on the coupons from a solvent solution. After drying, the dried films were sintered 5 minutes at 120 °C just as the dried ground powders from the previous examples. Bonding was evaluated using natural rubber bonded at 160 °C and 13.8 MPa for 15 minutes.

| Steel substrate | Peel Value (N/cm) | % rubber retention |
|---|---|---|
| Blasted bare steel | 240 | 95 |
| Zinc phosphatized | 177 | 98 |
| CHEMLOK 205 | 93 | 100 |
| MetaUacket 1100/2110 | 93 | 100 |

### Examples 14 and 15

The following polymers were isolated by precipitation in methanol and dried. The materials were the ground to powder and applied to MetalJacket coated steel coupons as a powder. The powder coating was sintered for 5 minutes at 125 °C prior to bonding with natural rubber. While the first blend alone will bond rubber, the second formulation with the addition of a crosslinking agent improves the performance:
14) 50:50 blend of post brominated DCD (5.6% bromine) and a copolymer of 2,3-dichlorobutadiene (DCD) with 10% α-bromoacrylonitrile (α-BRAN). (not according to the invention)
15) 50:50 blend of post brominated DCD (5.6% bromine) and a copolymer of 2,3-dichlorobutadiene (DCD) with 10% α-bromoacrylonitrile (α-BRAN) formulated with 5% dinitrosobenzene crosslinker.

| Example # | Peel Value | Rubber Retention |
|---|---|---|
| 14 | 114 N/cm | 95% rubber |
| 15 | 161 N/cm | 100% rubber |

### Example 16

The following formulation was melt mixed in a Haake Rheocord lab mixer at 75 °C and was ground into powder using a cryogenic hammermill. The powder coating was sintered for 5 minutes at 125 °C prior to bonding.
62 weight percent CPPepoxy,
29 weight percent dinitrosobenzene.
5 weight percent magnesium oxide,
4 weight percent phenylene bismaleimide,

This adhesive formulation was then applied to all of the following substrates:
55 durometer black-reinforced, sulfur-cured natural rubber:
   Adhesive applied over the following substrates:

| | phosphatized steel | blasted steel | Steel coated with CHEMLOK 205 primer | glass filled Nvlon 6-6 |
|---|---|---|---|---|
| Break values | 135 N/cm | 172 N/cm | 159 N/cm | 81 N/cm |
| Rubber retention (%) | 100 | 100 | 100 | 100 |

| | 69 series epoxy (by Tiger Drylac) on phosphatized steel | | | |
|---|---|---|---|---|
| Break values | 194 N/cm | | | |
| Rubber retention (%) | 90 | | | |

| 70 durometer black-reinforced, peroxide-cured EPDM rubber: | | | | Comparative Example: |
|---|---|---|---|---|
| | Steel with Ch 205 | Steel with Ch 8007 | Bare 6061 aluminum | steel with Ch 205/6254 |
| Break values | 144 N/cm | 145 N/cm | 145 N/cm | 156 N/cm |
| Rubber retention (%) | rubber break | rubber break | rubber break | rubber break |

| 50 durometer black-reinforced, sulfur-cured Nitrile rubber: | | | | Comparative Example: |
|---|---|---|---|---|
| | Steel with Ch 205 | Steel with Ch 8007 | Bare 6061 aluminum | steel with Ch 205/6254 |
| Break values | 165 N/cm | 182 N/cm | 158 N/cm | 172 N/cm |
| Rubber retention (%) | rubber break | rubber break | rubber break | rubber break |

| 65 durometer black-reinforced, metal oxide-cured Chlorobutyl rubber: | | | | Comparative Example: |
|---|---|---|---|---|
| | Steel with Ch 205 | Steel with Ch 8007 | Bare 6061 aluminum | steel with Ch 205/6254 |
| Break values | 102 N/cm | 126 N/cm | 105 N/cm | 124 N/cm |
| Rubber retention (%) | 55 | 60 | 60 | 50 |

| 40 durometer black-reinforced, metal oxide-cured G type Neoprene rubber: | | | | Comparative Example: |
|---|---|---|---|---|
| | Steel with Ch 205 | Steel with Ch 8007 | Bare 6061 aluminum | steel with Ch 205/6254 |
| Break values | 130 N/cm | 105 N/cm | 116 N/cm | 109 N/cm |
| Rubber retention (%) | rubber break | rubber break | rubber break | rubber break |

## Claims

1. A powder adhesive composition for bonding an elastomer to a metal substrate comprising a powdered film forming polymer having a liquefaction temperature above room temperature and is capable of forming rubber tearing bonds between the elastomer and the metal substrate, wherein the film forming polymer comprises halogenated polypropylene **characterized in that** the composition comprises a crosslinking agent comprising a nitroso compound.

2. The adhesive composition of claim 1, wherein the powder adhesive composition is substantially absent water or solvents, preferably wherein the powder adhesive is completely free from water or solvents.

3. The adhesive composition of claim 1, wherein the film forming polymer has a liquefaction temperature of at least 50 °C.

4. The adhesive composition of claim 1, wherein the film forming polymer has a liquefaction temperature of less than 300 °C.

5. The adhesive composition of claim 1, wherein the halogenated polypropylene is selected from (i) chlorinated polypropylene, (ii) post-chlorinated polypropylene derivatized with 0.1 to 10 weight parts per 100 weight parts of post-chlorinated polypropylene of maleic anhydride, and (iii) post chlorinated polypropylene derivatized with 0.1 to 10 weight parts per 100 weight parts of post-chlorinated polypropylene of epoxy obtained by reacting post-chlorinated polypropylene with an epoxy group containing compound.

6. The adhesive composition of claim 5, wherein the chlorinated polypropylene (i) is a post-chlorinated polypropylene.

7. The adhesive composition of claim 5 or 6, wherein the post-chlorinated polypropylene has a weight average molecular weight of from 5,000 to 60,000, preferably from 15,000 to 45,000.

8. The adhesive composition of claim 5 or 6, wherein the post-chlorinated polypropylene has a chlorine content of from 10 to 60 weight percent, preferably from 20 to 50 weight percent.

9. The adhesive composition of claim 1, wherein the powder adhesive composition comprises less than 10 weight percent of an epoxy polymer or epoxy functionality on a diene polymer.

10. The adhesive composition of claim 1, wherein the nitroso compound comprises 1,4-dinitrosobenzene.

11. The adhesive composition of claim 1, applied to a metal substrate, preferably bonded to said metal substrate and an elastomer, more preferably wherein the metal substrate is coated with a primer prior to application of the adhesive composition.

12. The adhesive composition of claim 1, wherein said rubber tearing bonds comprise at least 80 percent or at least 90 percent rubber retention on the substrate when measured according to ASTM D 429 Method B.

13. A bonded article comprising an elastomeric layer and a metal substrate, and an adhesive layer between the elastomeric layer and the metal substrate, wherein the adhesive layer comprises the powder adhesive composition according to anyone of claims 1 to 12 applied to the metal substrate, melted, and co-cured with the elastomer.

14. A method for making a rubber to metal bonded component comprising:
a) applying the powder adhesive composition according to anyone of claims 1 to 12 to at least one of a rubber substrate and a metal substrate;
b) contacting the rubber substrate and the metal substrate such that said adhesive is disposed at least partially therebetween; and,
c) curing the rubber substrate and the adhesive simultaneously;
wherein said adhesive is substantially absent water and organic solvent when it is applied.

## Patentansprüche

1. Pulverkleberzusammensetzung zum Kleben eines Elastomers auf ein Metallsubstrat, umfassend ein pulverförmiges filmbildendes Polymer mit einer Verflüssigungstemperatur oberhalb Raumtemperatur, das im Elastomeren brechende Bindungen zwischen dem Elastomer und dem Metallsubstrat bilden kann, wobei das filmbildende Polymer halogeniertes Polypropylen umfasst, **dadurch gekennzeichnet, dass** die Zusammensetzung ein Vernetzungsmittel umfasst, das eine Nitrosoverbindung umfasst.

2. Kleberzusammensetzung gemäß Anspruch 1, wobei die Pulverkleberzusammensetzung im Wesentlichen frei von Wasser oder Lösungsmitteln ist, wobei der Pulverkleber vorzugsweise völlig frei von Wasser oder Lösungsmitteln ist.

3. Kleberzusammensetzung gemäß Anspruch 1, wobei das filmbildende Polymer eine Verflüssigungstemperatur von wenigstens 50 °C hat.

4. Kleberzusammensetzung gemäß Anspruch 1, wobei das filmbildende Polymer eine Verflüssigungstemperatur von weniger als 300 °C hat.

5. Kleberzusammensetzung gemäß Anspruch 1, wobei das halogenierte Polypropylen ausgewählt ist aus (i) chloriertem Polypropylen, (ii) nachchloriertem Polypropylen, das mit 0,1 bis 10 Gewichtsteilen Maleinsäureanhydrid pro 100 Gewichtsteile nachchloriertem Polypropylen derivatisiert ist, und (iii) nachchloriertem Polypropylen, das mit 0,1 bis 10 Gewichtsteilen Epoxid pro 100 Gewichtsteile nachchloriertem Polypropylen derivatisiert ist und durch Umsetzen von nachchloriertem Polypropylen mit einer Epoxidgruppen enthaltenden Verbindung erhalten wird.

6. Kleberzusammensetzung gemäß Anspruch 5, wobei das chlorierte Polypropylen (i) ein nachchloriertes Polypropylen ist.

7. Kleberzusammensetzung gemäß Anspruch 5 oder 6, wobei das nachchlorierte Polypropylen ein Gewichtsmittel des Molekulargewichts von 5000 bis 60 000, vorzugsweise von 15 000 bis 45 000, aufweist.

8. Kleberzusammensetzung gemäß Anspruch 5 oder 6, wobei das nachchlorierte Polypropylen einen Chlorgehalt von 10 bis 60 Gew.-%, vorzugsweise 20 bis 50 Gew.-%, aufweist.

9. Kleberzusammensetzung gemäß Anspruch 1, wobei die Pulverkleberzusammensetzung weniger als 10 Gew.-% eines Epoxidpolymers oder Epoxidfunktionen auf einem Dienpolymer umfasst.

10. Kleberzusammensetzung gemäß Anspruch 1, wobei die Nitrosoverbindung 1,4-Dinitrosobenzol umfasst.

11. Kleberzusammensetzung gemäß Anspruch 1, die auf ein Metallsubstrat aufgetragen ist, vorzugsweise an ein Metallsubstrat und ein Elastomer geklebt ist, wobei das Metallsubstrat besonders bevorzugt vor dem Auftragen der Kleberzusammensetzung mit einer Grundierung beschichtet ist.

12. Kleberzusammensetzung gemäß Anspruch 1, wobei die im Elastomeren brechenden Bindungen eine Kautschukretention auf dem Substrat von wenigstens 80 Prozent oder wenigstens 90 Prozent umfassen, wenn gemäß ASTM D 429, Verfahren B, gemessen wird.

13. Geklebter Artikel, der eine elastomere Schicht und ein Metallsubstrat sowie eine Kleberschicht zwischen der elastomeren Schicht und dem Metallsubstrat umfasst, wobei die Kleberschicht die Pulverkleberzusammensetzung gemäß einem der Ansprüche 1 bis 12 umfasst, die auf das Metallsubstrat aufgetragen, geschmolzen und mit dem Elastomer gemeinsam ausgehärtet ist.

14. Verfahren zur Herstellung einer Komponente, die aus auf Metall geklebtem Kautschuk besteht, umfassend:
a) Auftragen der Pulverkleberzusammensetzung gemäß einem der Ansprüche 1 bis 12 auf ein Kautschuksubstrat und/oder ein Metallsubstrat;
b) In-Kontakt-Bringen des Kautschuksubstrats und des Metallsubstrats, so dass der Kleber wenigstens teilweise dazwischen verteilt ist; und
c) gleichzeitiges Härten des Kautschuksubstrats und des Klebers;
wobei der Kleber im Wesentlichen frei von Wasser und organischem Lösungsmittel ist, wenn er aufgetragen wird.

## Revendications

1. Composition adhésive en poudre pour lier un élastomère à un substrat de métal, comprenant un polymère filmogène en poudre ayant une température de liquéfaction au-dessus de la température ambiante et qui est à même de former des liaisons de déchirure en caoutchouc entre l'élastomère et le substrat de métal, dans laquelle le polymère filmogène comprend du polypropylène halogéné, **caractérisée en ce que** la composition comprend un agent de réticulation comprenant un composé nitroso.

2. Composition adhésive selon la revendication 1, dans laquelle la composition adhésive en poudre est sensiblement exempte d'eau ou de solvants, de préférence dans laquelle l'adhésif en poudre est complètement exempt d'eau ou de solvants.

3. Composition adhésive selon la revendication 1, dans laquelle le polymère filmogène a une température de liquéfaction d'au moins 50 °C.

4. Composition adhésive selon la revendication 1, dans laquelle le polymère filmogène a une température de liquéfaction inférieure à 300 °C.

5. Composition adhésive selon la revendication 1, dans laquelle le polypropylène halogéné est choisi parmi (i) du polypropylène chloré, (ii) du polypropylène post-chloré dérivatisé avec 0,1 à 10 parties en poids par 100 parties en poids de polypropylène post-chloré d'anhydride maléique, et (iii) du polypropylène post-chloré dérivatisé avec 0,1 à 10 parties en poids par 100 parties en poids de polypropylène post-chloré d'époxyde obtenu en faisant réagir du polypropylène post-chloré avec un composé contenant un groupement époxy.

6. Composition adhésive selon la revendication 5, dans laquelle le polypropylène chloré (i) est un polypropylène post-chloré.

7. Composition adhésive selon la revendication 5 ou la revendication 6, dans laquelle le polypropylène post-chloré a un poids moléculaire moyen en poids de 5000 à 60 000, de préférence de 15 000 à 45 000.

8. Composition adhésive selon la revendication 5 ou la revendication 6, dans laquelle le polypropylène post-chloré a une teneur en chlore de 10 à 60 % en poids, de préférence de 20 à 50 % en poids.

9. Composition adhésive selon la revendication 1, dans laquelle la composition adhésive en poudre comprend moins de 10 % en poids d'un polymère époxy ou d'une fonctionnalité époxy sur un polymère de diène.

10. Composition adhésive selon la revendication 1, dans laquelle le composé nitroso comprend le 1,4-dinitrosobenzène.

11. Composition adhésive selon la revendication 1, appliquée à un substrat de métal, de préférence liée audit substrat de métal et à un élastomère, mieux encore dans laquelle le substrat de métal est revêtu d'une couche de fond avant l'application de la composition adhésive.

12. Composition adhésive selon la revendication 1, dans laquelle lesdites liaisons de déchirure en caoutchouc comprennent au moins 80 % ou au moins 90 % de caoutchouc retenu sur le substrat lorsqu'on effectue la mesure selon la norme ASTM D 429 procédé B.

13. Article lié comprenant une couche élastomère et un substrat de métal ainsi qu'une couche adhésive entre la couche élastomère et le substrat de métal, dans lequel la couche adhésive comprend la composition adhésive en poudre selon l'une quelconque des revendications 1 à 12, appliquée au substrat de métal, fondue et co-durcie avec l'élastomère.

14. Procédé de fabrication d'un composant à liaison caoutchouc-métal, comprenant :
a) l'application de la composition adhésive en poudre selon l'une quelconque des revendications 1 à 12, sur au moins un substrat formé d'un substrat de caoutchouc et d'un substrat de métal ;
b) la mise en contact du substrat de caoutchouc et du substrat de métal de sorte que ledit adhésif soit disposé au moins en partie entre eux ; et
c) le durcissement du substrat de caoutchouc et de l'adhésif simultanément ;
dans lequel ledit adhésif est sensiblement exempt d'eau et de solvant organique lorsqu'il est appliqué.
